# EUROPEAN PATENT APPLICATION

(11) **EP 3 939 479 A1**
(43) Date of publication of application: **19.01.2022**
(21) Application number: 21184375.0
(22) Date of filing: 07.07.2021
(51) Int. Cl.: A47J 31/00, A47J 31/06, A47J 31/44

(54) **ESPRESSO COFFEE MACHINE**

(30) Priority: 08.07.2020 IT 202000016552
(71) Applicant: Gruppo Cimbali S.p.A., 20082 Binasco (MI) (IT)
(72) Inventor: Volonté, Claudio, Binasco MI (IT); Marchesan, Michele, Fiume Veneto PN (IT)
(74) Representative: Perani & Partners S.p.A.

(57) **Abstract**

An espresso coffee machine (1) comprising a dispenser unit (2) and a portafilter (3) adapted to be removably attached to the dispenser unit (2), wherein:
- the portafilter (3) comprises a basket body (31), a filter (4) inserted in the basket body (31) and a pair of wings (32) projecting out of the basket body (31); the portafilter (3) is adapted to be alternated between a work configuration in which it is attached to the dispenser unit (2) and a rest configuration in which it is removed from the dispenser unit (2);
- the dispenser unit (2) comprises a cavity (5) delimited by a side wall (51) and defining an inner volume (52) accessible via an opening (53), the portafilter (3) being adapted to be attached to the dispenser unit (2) along a longitudinal axis (X-X) in a fit-in direction (I) and to be pulled out of the dispenser unit (3) along the longitudinal axis (X-X) in a pull-out direction (E) opposite to the fit-in direction (I); attachment guides (6) formed on the side wall (51), each wing (32) is configured to slide along the attachment guides (6) to alternate the portafilter (3) between the work configuration and the rest configuration; a gasket(7) located in the cavity (5) and configured to abut an inner portion (41) of the filter (4), to be received inside the filter (4), when the portafilter (3) is in the work configuration; biasing means (8) located in the cavity (5) and configured to bias the portafilter (3) along the longitudinal axis (X-X) in the pull-out direction (E), when the portafilter (3) alternates from the work configuration to the rest configuration.

## Description

### Technical field

The present invention relates to an espresso coffee machine, namely for professional use, of the type having a plurality of dispensing points that can also operate simultaneously.

### Background art

Such espresso machines are namely installed in bars, restaurants and similar public commercial concerns. Typically, such types of machines are exposed to peak beverage dispensing demand at certain times of the day, such as at meal times.

Espresso machine operators are thus exposed to highly intense and repetitive activity, which can cause excessive fatigue of their upper limbs.

Certain prior art dispenser units for espresso machines are designed to minimize the force required to tighten a portafilter in a dispenser unit, to reduce operator fatigue.

One example of such machines is disclosed in AT 216 695. In detail, AT 216 695 discloses a dispenser unit for espresso coffee machines, comprising a seat with a groove configured to accommodate an annular gasket. A portafilter, containing a filter, is adapted to be attached to the seat of the dispenser unit, to seat the annular gasket in the filter. The dimensions of the gasket and the groove in which it is contained are selected to allow seating of the gasket in the filter to generate a force fit.

Therefore, the operator is not required to firmly tighten the portafilter in the seat of the dispenser unit to achieve a force fit connection but will simply rotate the portafilter until the gasket is seated in the filter.

One drawback of such espresso machines is that during release the filter, which is at temperatures of nearly 90°, will often stick with the gasket and hang from the dispenser unit, and the operator must pull it out manually, with the risk of getting burned.

### SUMMARY OF THE INVENTION

The aforementioned technical purpose and objects are substantially achieved by a an espresso machine as defined in the present invention.

The espresso machine of the present invention comprises a dispenser unit and a portafilter which can be removably attached to the dispenser unit. In detail, the portafilter can be alternated between a work configuration in which it is attached to the dispenser unit and a rest configuration in which it is removed from the dispenser unit. The portafilter can be attached to the dispenser unit along a longitudinal axis in a fit-in direction and can be removed from the dispenser unit along the same direction but in a pull-out direction opposite to the fit-in direction.

The portafilter comprises a basket body, a filter inserted in the basket body and configured to hold a given dose of ground coffee, and a pair of wings projecting out of the basket body.

The dispenser unit comprises a cavity delimited by a side wall and defining an inner volume accessible via an opening. The cavity is suitably sized to at least partially accommodate therein both the filter and the portafilter, when the latter is in the work configuration.

Furthermore, the dispenser unit comprises attachment guides formed by the side wall of the cavity, allowing attachment/release of the portafilter to/from the dispenser unit. More in detail, the wings of the portafilter are configured to slide along the attachment guides to alternate the portafilter between the work configuration and the rest configuration.

The dispenser unit is characterized in that it comprises biasing means located in the cavity and configured to bias the portafilter along the longitudinal axis in the pull-out direction, when the portafilter alternates from the work configuration to the rest configuration.

Therefore, the present invention facilitates release of the portafilter because, as the biasing means bias the portafilter along the longitudinal axis in the pull-out direction, they prevent the filter from hanging from the dispenser unit during release.

### LIST OF FIGURES

Further features and advantages of the present invention will result more clearly from the illustrative, non-limiting description of a preferred, non-exclusive embodiment of an espresso coffee machine unit as shown in the annexed drawings, in which:
- Figure 1 shows a front view of an espresso machine of the present invention;
- Figure 2 shows an exploded view of a component of the espresso machine of Figure 1;
- Figure 3 shows a sectional view of a first embodiment of certain components of the espresso machine as shown in Figure 1;
- Figure 4 shows a sectional view of a second embodiment of certain components of the espresso machine as shown in Figure 1;
- Figure 5 shows a detail of Figure 4;
- Figure 6 shows a sectional view of a third embodiment of certain components of the espresso machine as shown in Figure 1.

### DETAILED DESCRIPTION

Even when not expressly stated, the individual features as described with reference to the particular embodiments shall be intended as auxiliary to and/or interchangeable with other features described with reference to other exemplary embodiments.

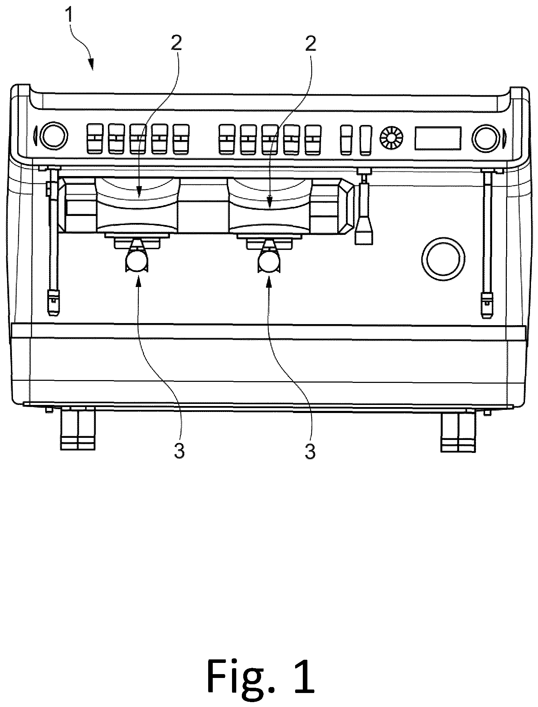

Referring to the accompanying drawings, in particular to Figure 1, the present invention relates to an espresso coffee machine 1. Preferably, but without limitation, the espresso coffee machine 1 has a plurality of dispensing points that can also operate simultaneously.

While reference will be made herein for simplicity to one of the dispensing points, the characteristics will be intended to be applicable to each dispensing point of the machine 1.

The espresso coffee machine 1 comprises a dispenser unit 2 located at a dispensing point, and a portafilter 3 adapted to be removably attached to the dispenser unit 2. In detail, the portafilter 3 can be alternated between a work configuration in which it is attached to the dispenser unit 2 and a rest configuration in which it is removed from the dispenser unit 2.

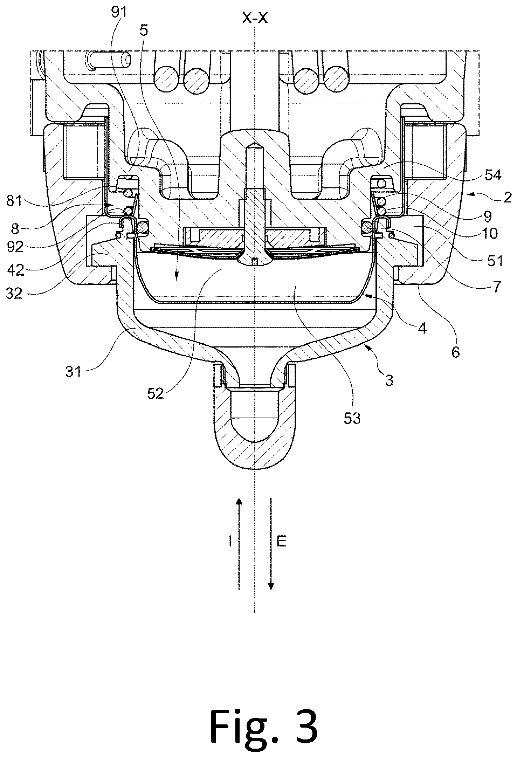

The portafilter 3 can be attached to the dispenser unit 2 along the longitudinal axis X-X in a fit-in direction I, and can be removed from the dispenser unit along the same longitudinal axis X-X in a pull-out direction E, opposite to the fit-in direction I. The longitudinal axis X-X and the fit-in and pull-out directions I, E are shown in Figures 3, 4 and 6.

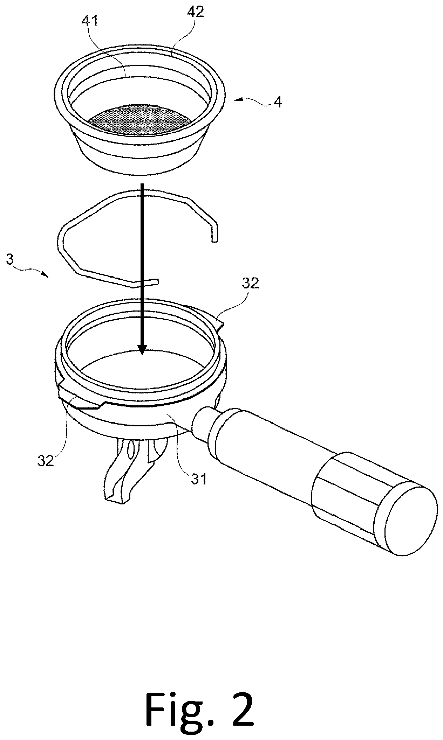

Particularly referring to Figure 2, the portafilter 3 comprises a basket body 31 connected to a handle which allows displacement thereof. The basket body 31 is delimited at the bottom by a closed bottom and laterally by a frustoconical wall.

The portafilter 3 comprises a filter 4 inserted in the basket body 31 and configured to hold a predetermined dose of ground coffee. In detail, the filter 4 is inserted in the basket body 31 between the closed bottom and the frustoconical wall and is locked by an elastic ring interposed between the basket body 31 and the filter 4, as shown in Figure 2.

Moreover, the portafilter 3 comprises a pair of wings 32 projecting out of the basket body 31 and configured to allow the portafilter 3 to be attached to the dispenser unit 2. As shown in Figure 2, the wings 32 are opposed and project out of the frustoconical wall of the basket body 31 in a radial direction.

As shown in Figures 3, 4 and 6, the dispenser unit 2 comprises a cavity 5 delimited by a side wall 51 and defining an inner volume 52 accessible via an opening 53. The cavity 5 is configured to at least partially receive the filter 4 and the portafilter 3 therein.

In the work configuration, the portafilter 3 and the filter 4 are inserted in the inner volume 52 of the cavity 5 thereby closing the opening 53; on the other hand, in the rest configuration, the portafilter 3 and the filter 4 are removed from the cavity 5, thereby clearing the opening 53.

The dispenser unit 2 also comprises attachment guides 6, formed on the side wall 51, and configured to allow the portafilter 3 to be attached to the dispenser unit 2. Preferably, the attachment guides 6 project out of the side wall 51. More in detail, each wing 32 of the portafilter 3 is configured to slide along the attachment guides 6 to move the portafilter 3 along the longitudinal axis X-X to alternate it between the work configuration and the rest configuration.

Preferably, the attachment guides 6 are a pair of helical attachment guides, projecting out of the side wall 51 of the cavity 5. Each wing 32 of the basket body 31, sliding in the corresponding helical attachment guide, moves the portafilter 3 with a rotary-translational motion along the longitudinal axis X-X to alternate it between the work and rest configurations.

The dispenser unit 2 comprises a gasket 7 located inside the cavity 5 and configured to abut an inner portion 41 of the filter 4, to be received inside the filter 4, when the portafilter 3 is in the work configuration.

As shown in Figures 3, 4 and 6, the cavity 5 comprises an abutment wall 54 connected to the side wall 51 to define the inner volume 52. Preferably, the abutment wall 54 has a central protrusion with a groove adapted to receive the gasket 7. The abutment wall 54 and the groove are configured to accommodate the gasket 7 abutting the inner portion 41 of the filter 4, when the portafilter 3 is in the work configuration.

In order to prevent the outflow of part of the coffee grounds in the filter during use, the gasket 7 and the groove are suitably sized to create a force-fit connection with the filter 4 when the portafilter 3 is in the work configuration.

Furthermore, the dispenser unit 2 comprises biasing means 8 located in the cavity 5 and configured to bias the portafilter 3 along the longitudinal axis X-X in the pull-out direction E, when the portafilter 3 alternates from the work configuration to the rest configuration.

Therefore, the biasing means 8 are configured to assist the operator in pulling the portafilter 3 out of the cavity 5, once coffee dispensing has been completed. In other words, the biasing means 8 prevent the filter from getting stuck with the gasket 7 while the portafilter is being pulled out of the dispenser unit 2.

In a first embodiment, as shown in Figure 3, the biasing means 8 comprise first means 81 configured to act on the filter 4. The first means 81 bias the filter 4 against the basket body 31 of the portafilter 3, along the longitudinal axis X-X in the pull-out direction E, when the portafilter 3 alternates from the work configuration to the rest configuration. In other words, the first means 81 act on the filter 4 to indirectly bias the portafilter 3 along the longitudinal axis X-X in the pull-out direction E.

Preferably, the first means 81 comprise an elastic means 9 arranged in the cavity 5. This elastic means 9 has a first portion 91 abutting the abutment wall 54 of the cavity 5, and a second portion 92 configured to bias an upper edge 42 of the filter 4.

The elastic means 9 is configured to be compressed when the portafilter 3 is in the work configuration and extended (released) when the portafilter 3 is in the rest configuration. As a result, the elastic means 9 is compressed when the portafilter 3 alternates from the rest configuration to the work configuration; and is extended, thereby basing the upper edge 42 of the filter 4 along the longitudinal axis X-X in the pull-out direction E, when the portafilter 3 alternates from the work configuration to the rest configuration.

The elastic means 9 may be for example a spring, or more generally an annular element made of an elastically deformable material.

The first means 81 may further comprise a spacer 10 coupled to the second portion 92 of the elastic means 9. As shown in Figure 3, the spacer 10 is interposed between the second portion 92 of the elastic means 9 and the upper edge 42 of the filter 4, when the portafilter 3 is in the work configuration. The spacer has the purpose of evenly distributing the bias of the elastic means 9 on the upper edge 42 of the filter 4, when the portafilter 3 alternates from the work configuration to the rest configuration.

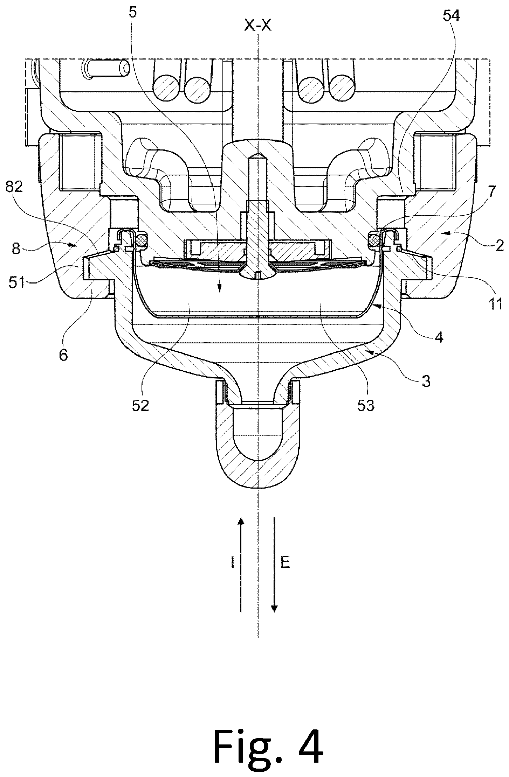

In a second embodiment as shown in Figure 4, the biasing means 8 comprise second means 82 configured to act on the portafilter 3. In detail, the seconds means 82 are configured to act upon the basket body 31 to bias the portafilter 3 along the longitudinal axis X-X in the pull-out direction E, when the portafilter 3 alternates from the work configuration to the rest configuration. More in detail, the second means 82 act on the basket body 31 of the portafilter 3, through the pair of wings 32.

It should be noted that, unlike the first means 81, the second means 82 act directly on the portafilter 3.

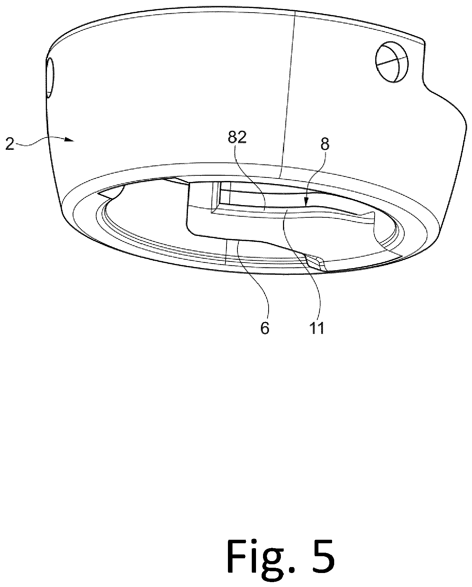

As shown in Figures 4 and 5, the second means 82 comprise release guides 11, formed on the side wall 51 of the cavity 5, and configured to facilitate the operation of releasing the portafilter 3 from the dispenser unit 2. Preferably, the release guides 11 project out of the side wall 51 of the cavity 5. Specifically, the release guides 11 bias the portafilter 3 along the longitudinal axis X-X in the pullout direction E, when the portafilter alternates from the work configuration to the rest configuration.

Preferably, the release guides 11 are a pair of helical release guides projecting out of the side wall 51 of the cavity 5. The helical release guides are configured to act on the wings 32 of the basket body 31, to bias the portafilter 3 along the longitudinal axis X-X in the pull-out direction E, when the portafilter 3 alternates from the work configuration to the rest configuration.

In practice, as each wing 32 of the basket body 31 slides in the corresponding helical release guide, it moves the portafilter with a rotary-translational motion along the longitudinal axis X-X in the pull-out direction E, to alternate it between the work configuration to the rest configuration.

The release guides 11 are opposite to the attachment guides 6, to be placed on opposite side of the wings 32 of the basket body 31, when the portafilter is in the work configuration.

Particularly referring to Figures 4 and 5, in a preferred embodiment, the attachment and release guides 6, 11 are respectively the pair of oppositely arranged helical attachment and release guides. As the wings 32 slide in the helical attachment guides, they move the portafilter 3 with a roto-translational motion along the longitudinal axis X-X in the fit-in direction I, to alternate the portafilter from the rest configuration to the work configuration. Likewise, as the wings 32 slide in the helical release guides, they move the portafilter 32 with a rotary-translational motion along the longitudinal axis X-X in the pull-out direction E, to alternate the portafilter 3 between the work configuration to the rest configuration.

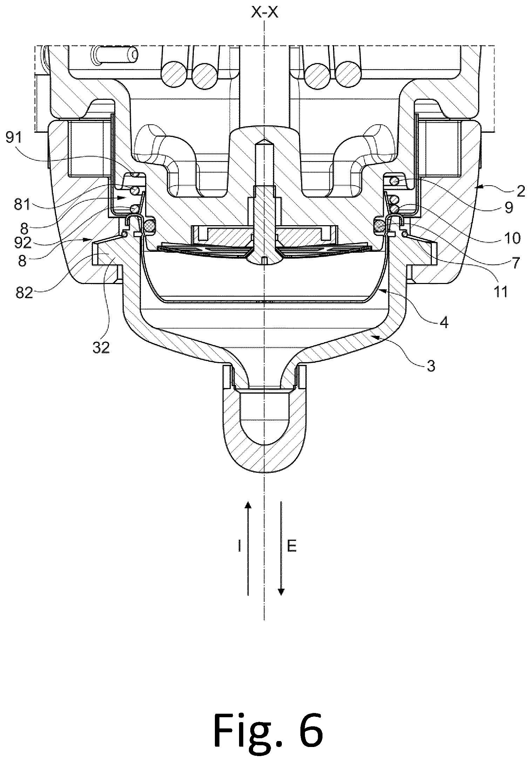

In a third embodiment, as shown in Figure 6, the biasing means 8 comprise both first and second means 81, 82. The first and seconds means 81, 82 are configured to act upon the filter 4 and the portafilter 3 respectively, to synergistically bias the portafilter 3 along the longitudinal axis X-X in the pull-out direction E, when the portafilter 3 alternates from the work configuration to the rest configuration.

Thus, the third embodiment is a combination of the above described first and second embodiments, and what has been described above for the first and second embodiments is also applicable to the third embodiment.

## Claims

1. An espresso coffee machine (1) comprising a dispenser unit (2) and a portafilter (3) adapted to be removably attached to the dispenser unit (2), wherein:
- the portafilter (3) comprises a basket body (31), a filter (4) inserted in the basket body (31) and configured to contain a given dose of coffee grounds, and a pair of wings (32) projecting out of the basket body (31); the portafilter (3) being adapted to be alternated between a work configuration in which it is attached to the dispenser unit (2) and a rest configuration in which it is removed from the dispenser unit (2);
- the dispenser unit (2) comprises:
- a cavity (5) delimited by a side wall (51) and defining an inner volume (52) accessible via an opening (53); the cavity (5) being configured to at least partially receive the filter (4) and the portafilter (3) when the portafilter (3) is in the work configuration; the portafilter (3) being adapted to be attached to the dispenser unit (2) along a longitudinal axis (X-X) in a fit-in direction (I) and to be pulled out of the dispenser unit (3) along the longitudinal axis (X-X) in a pull-out direction (E) opposite to the fit-in direction (I);
- attachment guides (6) formed on the side wall (51), each wing (32) of the portafilter (3) being configured to slide along the attachment guides (6) to alternate the portafilter (3) between the work configuration and the rest configuration;
- a gasket (7) located inside the cavity (5) and configured to abut an inner portion (41) of the filter (4), to be received inside the filter (4), when the portafilter (3) is in the work configuration;
**characterized in that** the dispenser unit (2) comprises biasing means (8) located in the cavity (5) and configured to bias the portafilter (3) along the longitudinal axis (X-X) in the pull-out direction (E), when the portafilter (3) alternates from the work configuration to the rest configuration.

2. Espresso machine (1) as claimed in claim 1, wherein the biasing means (8) comprise first means (81) configured to act on the filter (4) to bias it against the basket body (31) of the portafilter (3) along the longitudinal axis (X-X) in the pull-out direction (E), when the portafilter (3) alternates from the work configuration to the rest configuration.

3. Espresso machine (1) as claimed in claim 2, wherein:
- the cavity (5) of the dispenser unit has an abutment wall (54) connected to the side wall (51); and
- the first means (81) comprise an elastic means (9) located in the cavity (5), the elastic means (9) having a first portion (91) abutting the abutment wall (54) of the cavity (5) and a second portion (92) configured to exert a thrust on an upper edge (42) of the filter (4).

4. Espresso machine (1) as claimed in claim 3, wherein the elastic means (9) is configured to:
- compress, when the portafilter (3) alternates from the rest configuration to the operating configuration; and
- extend, thereby biasing the upper edge of the filter (42) along the longitudinal axis (X-X) in the pull-out direction (E), when the portafilter alternates from the work configuration to the rest configuration.

5. Espresso machine (1) as claimed in claim 3 or 4, wherein the first means (81) comprise a spacer (10) coupled to the second portion (92) of the elastic means (9), the spacer (10) being interposed between the second portion (92) of the elastic means (9) and the upper edge (42) of the filter (4) when the portafilter (3) is in the work configuration.

6. Espresso machine (1) as claimed in claim 1, wherein the biasing means (8) comprise seconds means (82) configured to act on the basket body (31) of the portafilter (3) along the longitudinal axis (X-X) in the pull-out direction (E), when the portafilter (3) alternates from the work configuration to the rest configuration.

7. Espresso machine (1) as claimed in claim 6, wherein the second means (82) comprise release guides (11) formed on the side wall (51) of the cavity (5), the release guides (11) being configured to bias the portafilter (3) along the longitudinal axis (X-X) in the pull-out direction (E), when the portafilter (3) alternates from the work configuration to the rest configuration.

8. Espresso machine (1) as claimed in claim 7, wherein the release guides (11) act on the wings (32) of the basket body (31) to bias the portafilter (3) along the longitudinal axis (X-X) in the pull-out direction (E), when the portafilter (3) alternates from the work configuration to the rest configuration.

9. Espresso machine (1) as claimed in claim 8, wherein the release guides (11) are placed opposite to the attachment guides (6), to be placed on opposite sides of the wings (32) of the basket body (31), when the portafilter (3) is in the work configuration.

10. Espresso machine (1) as claimed in claims 2 and 6, wherein the biasing means (8) comprise the first and the second means (81, 82) configured to act on the filter (4) and the portafilter (3) respectively, for synergistically biasing the portafilter (3) along the longitudinal axis (X-X) in the pull-out direction (E), when the portafilter (3) alternates from the work configuration to the rest configuration.
